# EUROPEAN PATENT APPLICATION

(11) **EP 3 415 812 A1**
(43) Date of publication of application: **19.12.2018**
(21) Application number: 17175739.6
(22) Date of filing: 13.06.2017
(51) Int. Cl.: F21V 5/08, F21V 7/00, G02B 27/09, G02B 19/00, F21K 9/69, F21Y 115/10, F21W 131/103

(54) **A LENS FOR A LIGHT SOURCE, FOR PROVIDING AN ASYMMETRIC OUTPUT, AND A LIGHTING UNIT USING THE LENS**

(71) Applicant: Philips Lighting Holding B.V., 5656 AE Eindhoven (NL)
(72) Inventor: The designation of the inventor has not yet been filed
(74) Representative: Verweij, Petronella Daniëlle

(57) **Abstract**

The invention provides a lens comprising a lens body which defines a first lens surface and a second lens surface, with a cavity is formed beneath the first lens surface. A light source location is in or beneath the cavity. In two orthogonal directions the lens has different properties. In one direction, a wide beam light output is formed and in the other direction a total internal reflection collimated output is formed.

## Description

### FIELD OF THE INVENTION

This invention relates to lenses for shaping the light output from a light source, in particular to provide an asymmetric light output.

### BACKGROUND OF THE INVENTION

One example where an asymmetric light output is desired is in road lighting. The light output is desired to extend a long way along the road direction so that fewer light poles are needed. However, the light output is desired to extend across a smaller distance across the road direction, so that light output is not wasted.

Different road layouts require different lighting solutions, depending on the road size and path followed, and the presence or not of a sidewalk which also needs to be illuminated. If a road is in close proximity to housing, there is then increased need for light shielding away from the road.

Current luminaires for road and street applications are ordered using so called choice sheets. The many choices available in such choice sheets lead to a huge diversity of products that can be ordered. As a consequence, outdoor luminaires are made to order where, in many cases, only a few products are made to any particular design. This leads to inefficiency in production and an increased chance for mistakes.

The requirements on light quality and energy savings prohibit a great deal of simplification of the choice sheet in order to reduce the diversity. From a customer's point of view the large diversity prohibits stock keeping of spare luminaires.

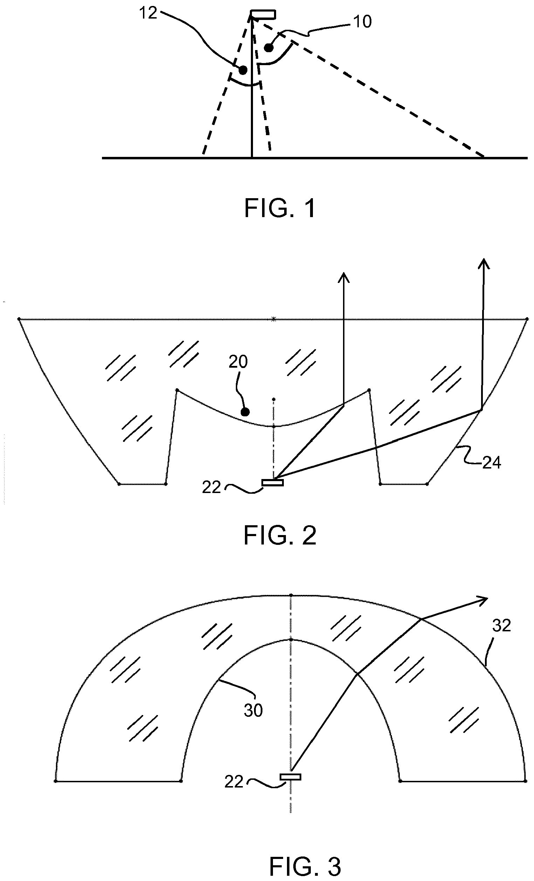

For road lighting, the required light output can be separated into two parts. As shown in Figure 1, a first part of the light output 10 is desired to light the road for motor vehicles, while a second part 12 of the light output is desired to a sidewalk (or cycle lane).

If there is housing adjacent the road many current road lighting products will cause light pollution for those residents. The most common solution to this problem is to provide light limiting louvres which are used to shield backward light. This approach may result in over 25% light loss. The use of louvres also increases cost.

It would be desirable to have an optical solution to avoid light pollution, while saving energy and cost. If a solution is available which does not result in efficiency reductions, the solution would also enable a single design to be used in more applications, for example where shielding of stray light is important as well as where it is not in fact required.

EP 2 172 696 discloses a lighting device designed to produce a rectangular illuminance pattern. However, the long axis length of the output beam is limited so that the lighting devices need to be closely spaced for a road lighting application.

### SUMMARY OF THE INVENTION

The invention is defined by the claims.

According to examples in accordance with an aspect of the invention, there is provided a lens, comprising:
a lens body which defines a first lens surface and a second lens surface, wherein a cavity is formed beneath the first lens surface, wherein a light source location is in or beneath the cavity,
wherein the lens body has a first direction and a second direction perpendicular to the first direction,
wherein in cross section along the first direction through the light source location the first lens surface defines a first outwardly curved refractive surface as viewed from the light source location, and the second lens surface defines a second refractive lens surface which comprises two lateral outwardly curved sections as viewed from the light source location, each having a domed surface, the first lens surface and the domed surfaces together performing a beam narrowing function, and
wherein in cross section along the second direction through the light source location the first lens surface defines a central inwardly curved refractive surface as viewed from the light source location and side walls, and the second lens surface defines total internal reflection side walls laterally outside the side walls of the first lens surface.

This lens design has different optical functions in different directions. In one direction (and hence cross section), the lens may be designed to generate an ultra-wide beam. This may correspond to a road direction. In an orthogonal direction (and hence cross section), an ultra-narrow beam may be generated for example to restrict light within the pedestrian road area.

The lens provides the combination of a freeform lens in one direction and a collimator profile in the other direction. The collimator profile functions using total internal reflection (TIR) to generate the desired generate ultra-slim light distribution, by controlling the reflected surface profile. The freeform lens is used to generate the desired ultra-wide light distribution, for example with an angular spread of up to 170 degrees.

The two lateral outwardly curved sections together form a peanut lens design. The lateral outwardly curved sections are preferably rotationally symmetric about an axis perpendicular to the first and second directions. Thus, they define a pair of domed structures on each lateral side. The lateral outwardly curved sections are for example spherical.

This design provides an extremely wide angle light output.

The second lens surface, in said cross section along the first direction, for example comprises a bridging section between the lateral outwardly curved sections. This bridging section is for example inwardly curved as viewed from the light source location. The overall lens effect at the bridging section is for example divergent.

The center of the bridging section may comprise a columnar surface. This may for example comprise a portion of a cylinder, although the cylinder cross sectional shape may be circular or non-circular.

The second lens surface may further comprise third and fourth upper outer regions arranged respectively between the lateral outwardly curved sections and the total internal reflection side walls. This means that along the second direction, the lens has the third and fourth outer regions at the ends, and the pair of lateral outwardly curved sections in the middle.

The third and fourth regions are for example formed by part of a columnar surface, with the column axis parallel to the second direction. They may comprise part of a cylindrical surface.

The side walls of the first lens surface in said cross section along the second direction may slope inwardly. This means that with increasing distance (in the optical axis direction) from the light source location, the side walls become closer together.

The total internal reflection side walls of the second lens surface in said cross section along the second direction may slope outwardly. This means that with increasing distance (in the optical axis direction) from the light source location, the TIR side walls become further apart.

In combination, these features define a TIR collimator layout.

Thus the overall design is such that in said cross section along the second direction, the first and second lens surfaces operate as a total internal reflection collimator to create a narrow light distribution. In said cross section along the first direction, the first and second lens surfaces instead operate as a peanut lens to create a wide light distribution.

By way of example, the lens may have a length (i.e. along the first direction) of 10 mm to 50 mm, a width (i.e. along the second direction) of 10 mm to 50 mm and a height of 5 mm to 20 mm.

The invention also provides a lighting unit comprising:
a lens as defined above; and
a light source located at the light source location such as a single LED.

The invention also provides a road lighting luminaire, comprising:
a lighting unit as defined above; and
a light pole for mounting the lighting unit above a road or walkway.

The lighting unit may be aligned with respect to the light pole such that the first direction is for arrangement parallel to the road or walkway and horizontal, and the second direction is for arrangement offset to the horizontal.

### BRIEF DESCRIPTION OF THE DRAWINGS

Examples of the invention will now be described in detail with reference to the accompanying drawings, in which:
Fig. 1 shows desired lighting to be provided by a road lighting luminaire;
Fig. 2 shows a lens profile for creating a collimated beam;
Fig. 3 shows a lens profile for creating a wide beam;
Fig. 4 shows a cross section of a lens from a first direction, and thus across a second perpendicular direction;
Fig. 5 shows a cross section of the lens from the second direction, and thus across a first perpendicular direction;
Fig. 6 shows the lens in perspective view from above;
Fig. 7 shows the lens in perspective view from below;
Fig. 8 shows a light output profile for a lamp post using the lens as part of the light unit; and
Fig. 9 shows two uses of the lens within a road lighting luminaire.

### DETAILED DESCRIPTION OF THE EMBODIMENTS

The invention provides a lens comprising a lens body which defines a first lens surface and a second lens surface, with a cavity formed beneath the first lens surface. A light source location is in or beneath the cavity. In two orthogonal directions the lens has different properties. In one direction, a wide beam light output is formed and in the other direction a total internal reflection collimated output is formed.

Figure 2 shows a lens design to create the desired collimated output. The lens has a convergent central lens 20 (i.e. one which is curved towards a light source location 22) and an outer TIR surface 24. The design enables a thin overall lens to be used to create a large area collimated beam. In particular, the beam area is larger than can be created with a simple lens alone, for a given overall thickness. The central lens may be considered to be a convex (converging) lens.

Figure 3 shows a lens design to create the desired wide beam output. The lens has a divergent inner surface 30 (i.e. one which is curved away from the light source location 22) and a divergent outer surface 32 (i.e. one which is again curved away from the light source location 22). The two divergent surfaces create a wide beam from the light source.

The invention provides a lens which combines these two functions into one three- dimensional structure.

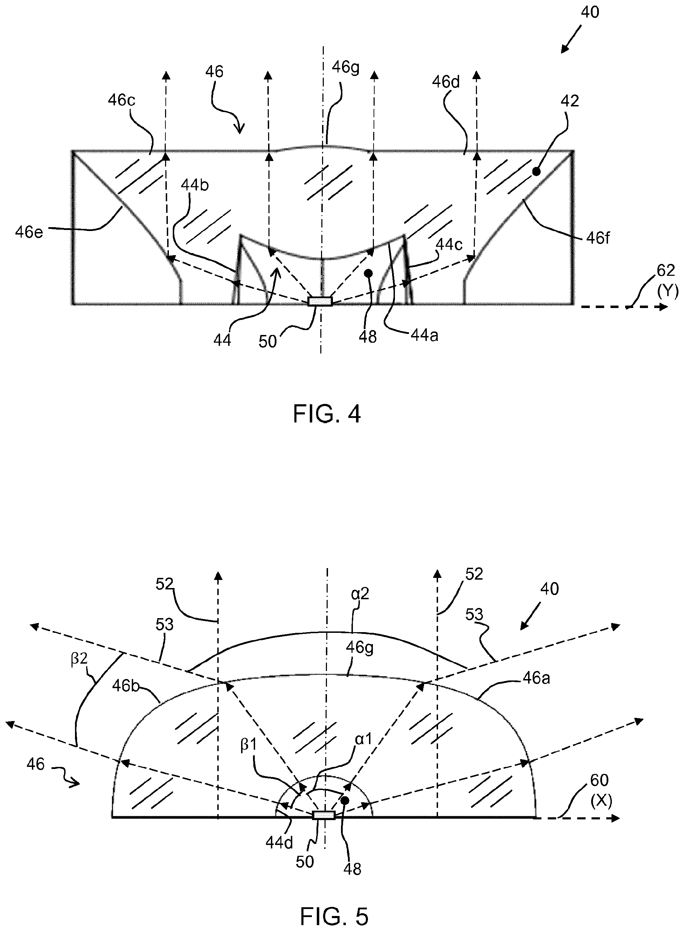

Figures 4 to 7 shows the lens design. The lens has a base which may be defined as being in plane having two orthogonal axes. A first, X-axis extends in a first direction 60 and a second, Y-axis extends in a second direction 62.

Figure 4 shows a cross section of the lens from the first direction 60, and thus across the second perpendicular direction 62.

Figure 5 shows a cross section of the lens from the second direction 62, and thus across the first perpendicular direction 60.

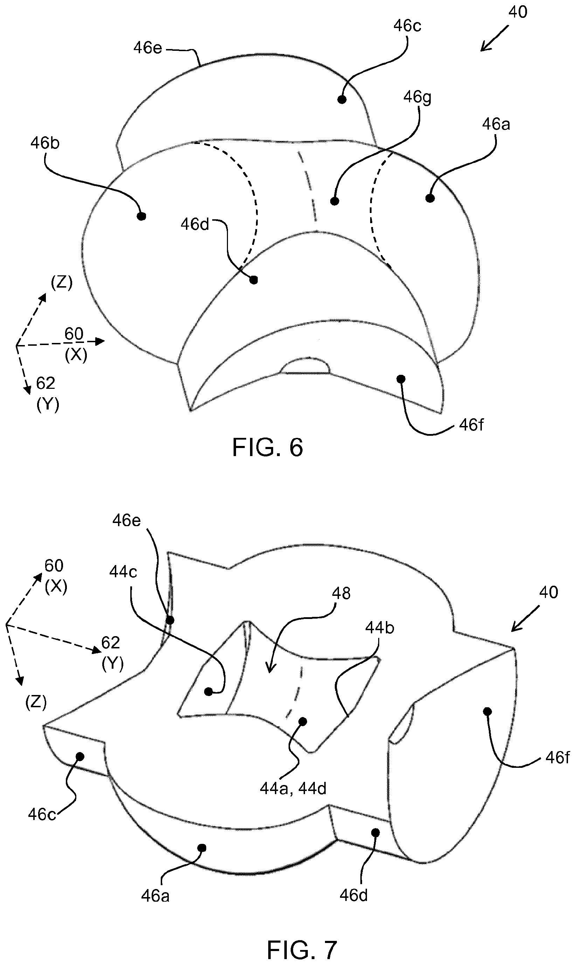

Figure 6 shows the lens in perspective view from above and Figure 7 shows the lens in perspective view from below.

The lens 40 comprises a lens body 42 which defines a first lens surface 44 and a second lens surface 46, wherein a cavity 48 is formed beneath the first lens surface 44. A light source location 50 is in or beneath the cavity.

Figure 4 shows the cross sectional view across the second direction 62. In the cross section along the second direction 62 and through the light source location 50, the first lens surface 44 defines a central inwardly curved refractive surface 44a, as viewed from the light source location. This is a convergent refractive surface. This corresponds to the lens surface 20 of Figure 2.

By "inwardly curved as viewed from the light source location" is meant that the surface curves towards the light source location, so that the normal distance to the surface is smallest along the optical axis. By "outwardly curved as viewed from the light source location" is meant that the surface curves away from the light source location, so that the normal distance to the surface is greatest along the optical axis. An inwardly curved surface for example may define a convergent refractive surface boundary, and an outwardly curved surface may defines a divergent refractive surface boundary. However, whether a surface is convergent or divergent will depend on the surface orientation relative to the incident beam and whether the surface presents an increase or a decrease in refractive index.

In this document, a "divergent" refractive surface boundary, or set of refractive surface boundaries, is one where a light output from the light source, when crossing the surface, experiences an increase in beam angle. Thus, the refractive index angle changes result in outward bending, away from the optical axis or a central beam within the range of angles of light received. This is for example seen for the ray drawn in Figure 3, where both surfaces are divergent.

Similarly, in this document, a "convergent" refractive surface boundary, or set of refractive surface boundaries, is one where a light output from the light source, when crossing the surface, experiences a decrease in beam angle. Thus, the refractive index angle changes result in inward bending, towards the optical axis or towards a central beam within the range of angles of light received. This is for example seen for the ray drawn in Figure 2 passing through the center lens 20.

The first lens surface 44 also has side walls 44b, 44c. The side walls 44b, 44c of the first lens surface slope inwardly in the cross section seen in Figure 4. By this is meant that they are increasingly close together at increasing depth of the cavity. The second lens surface 46 defines total internal reflection side walls 46e, 46f laterally outside the side walls 44b, 44c of the first lens surface. These correspond to the TIR surface 24 of Figure 2. The total internal reflection side walls 46e, 46f of the second lens surface slope outwardly in the cross section seen in Figure 4. By this is meant that they are increasingly far apart at increasing distance (in the normal direction) form the light source location.

Figure 5 shows the cross sectional view across the first direction 60. In the cross section along the first direction 60 and through the light source location, the first lens surface 44 defines a first outwardly curved refractive surface 44d as viewed from the light source location. This corresponds to the lens surface 30 of Figure 3.

In Figure 5, the first refraction is at the top surface of the cavity 48, and in the cross section shown it is the lowest part of the surface 44a of Figure 4, which is labelled as 44d. This is because the view of Figure 5 is perpendicular to that of Figure 4, and the rays shown are in that perpendicular plane.

The first lens surface bends rays which are close to the optical axis away from the optical axis, whereas it bends rays which are far from the optical axis back toward the optical axis. Thus, it reshapes the light output from the light source, so that the higher intensity forward light is spread laterally outwardly, whereas the lower intensity lateral light is concentrated. The aim is to create a more uniform light intensity across the output area.

The second lens surface 46 defines a second refractive lens surface which comprises two lateral outwardly curved sections 46a, 46b as viewed from the light source location, each having a domed surface.

These lateral outwardly curved sections 46a, 46b are rotationally symmetric about an axis 52 perpendicular to the first and second directions. This is the Z axis direction. Thus these sections 46a, 46b are domed regions. They maybe spherical.

The overall effect is that the first and second lens surfaces 44, 46a and 44, 46b reduce the angular spread of the light. Thus, for the sections 46, 46b, the overall lens function is locally convergent. Hence angle β2 in Figure 5 is less than angle β1. The rays 53 maybe considered to define the edge of the sections 46a, 46b. Thus, the first lens surface and the domed surfaces together perform a beam narrowing function. However, the narrowed beam is directed laterally outwardly so that an ultra-wide beam is formed. Thus, the overall angular extent of the beam is the same or wider than that delivered by the light source.

The overall outer appearance is most easily seen in Figures 6 and 7.

As shown in Figure 6, the two sections 46a, 46b are merged together by a bridging section 46g. This bridging section 46g is between the two lateral outwardly curved sections 46a, 46b and provides a smooth three dimensional shape transition. The center of the bridging section 46g comprises a columnar surface for example a portion of a cylinder. This can be seen most clearly in Figure 4.

The shape of the bridging section 46g as between the sections 46a, 46b can most clearly be seen in Figure 5. Figure 5 shows it to be generally flat, and slightly outwardly curved. Instead, it may be inwardly curved as viewed from the light source location.

The overall effect of the two lens surfaces 44d, 46g at the bridging section is to perform a divergent function. Hence angle α2 is greater than angle α1. The bridging section thus bends light rays away from the optical axis, again to create a more uniform light intensity output.

Thus, the overall lens effect is beam narrowing at the lateral angular extremes and beam widening in the normal, optical axis, direction.

The second lens surface 46 further comprises third and fourth upper outer regions 46c, 46d arranged respectively between the lateral outwardly curved sections 46a, 46b and the total internal reflection side walls 46e, 46f. In this way, the upper surface has five regions. The two domed regions 46a, 46b are bridged by the bridging section 46g, and the third and fourth upper outer regions define two end portions 46c 46d (in the second direction 62). Note that these end portions do not perform a significant optical function. Instead, they provide the required spacing to the total internal reflection side walls 46e, 46f. They may have a cylindrical surface which for perfectly collimated light would then simply function as a pass through surface (as can be seen in Figure 4). More generally, the third and fourth regions 46c, 46d are formed by part of a columnar surface, with the column axis parallel to the second direction 62.

These third and fourth upper outer regions 46c, 46d are optional, for example for larger sections 46a, 46b they may not be present in the design.

By way of example, the lens may have a length (the first direction) of 10 mm to 50 mm, a width (the second direction) of 10 mm to 50 mm and a height of 5 mm to 20 mm.

The particular lens design shown in the Figures has a size of 19.33 mm (X-axis) by 20 mm (Y-axis) by 7.27 mm (Z-axis). A light distribution of 27 degrees by 164 degrees is generated, with light efficiency of over 90%.

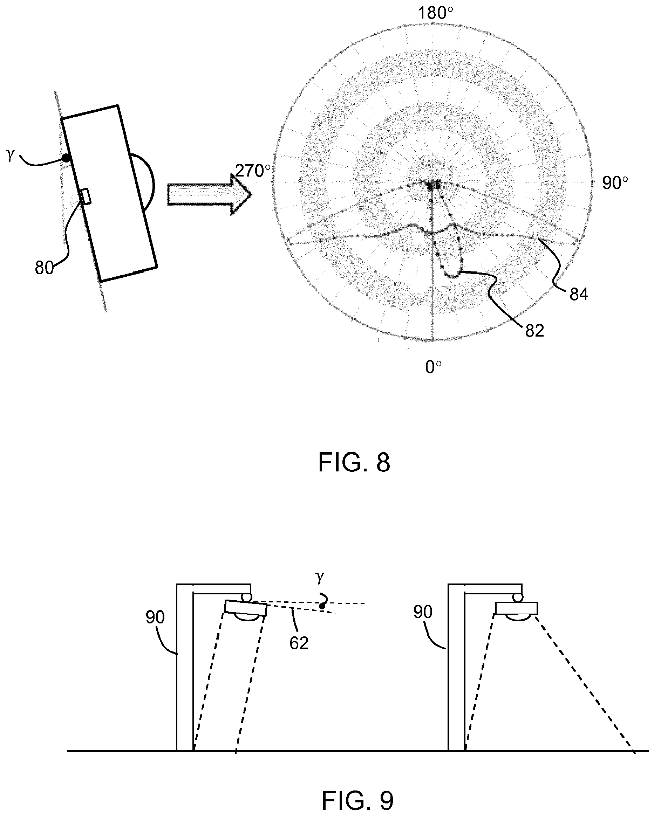

Figure 8 shows the light distribution, when tilting the lens to an angle γ, such as 13 degrees, (towards the pedestrian walkway). This tilt means that the second direction 62 is offset to the horizontal. The light source 80 is provided at the light source location. As shown, in one direction there is a narrow illumination width 82 and in the other direction there is a wide illumination width 84.

Figure 9 shows two applications for the use of the lens, to form a road lighting luminaire at the top of a light pole 90. The image to the left shows a use for illuminating a walkway. It shows the tilt used in the model of Figure 8. This solution may be used with dwellings right beside the road.

The image to the right shows use for illuminating a walkway and a road. This makes use of forward road light, to fulfil the light requirement for vehicles and pedestrians. Buildings around will not be affected by light pollution.

To implement the two different optical functions, the optics may be rotated by 90 degrees, in the horizontal plane.

The lens may be provided over light source in the form of a single LED or a set of LEDs.

The invention enables light pollution to be prevented from outdoor lighting applications. With the dedicated lens design, an ultra-wide beam is generated to fulfil pedestrian road lighting requirements, while preventing residents being disturbed. Compared with traditional solution, which use louvres, this design saves cost and enhances energy efficiency.

The peanut lens design which may be used to form the second lens surface is described further in US 8 220 958.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A lens (40), comprising:
a lens body (42) which defines a first lens surface (44) and a second lens surface (46), wherein a cavity (48) is formed beneath the first lens surface (44), wherein a light source location (50) is in or beneath the cavity,
wherein the lens body has a first direction (60) and a second direction (62) perpendicular to the first direction,
wherein in cross section along the first direction (60) through the light source location the first lens surface (44) defines a first outwardly curved refractive surface (44d) as viewed from the light source location and the second lens surface (46) defines a second refractive lens surface which comprises two lateral outwardly curved sections (46a, 46b) as viewed from the light source location, each having a domed surface, the first lens surface and the domed surfaces together performing a beam narrowing function, and
wherein in cross section along the second direction (62) through the light source location the first lens surface (44) defines a central inwardly curved refractive surface (44a) as viewed from the light source location and side walls (44b, 44c), and the second lens surface defines total internal reflection side walls (46e, 46f) laterally outside the side walls (44b, 44c) of the first lens surface.

2. A lens as claimed in claim 1, wherein the lateral outwardly curved sections (46a, 46b) are rotationally symmetric about an axis (52) perpendicular to the first and second directions.

3. A lens as claimed in claim 2, wherein the lateral outwardly curved sections (46a, 46b) are spherical.

4. A lens as claimed in any preceding claim, wherein the second lens surface (46), in said cross section along the first direction (60), comprises a bridging section (46g) between the lateral outwardly curved sections (46a, 46b).

5. A lens as claimed in claim 4, wherein the center of the bridging section (46g) comprises a columnar surface.

6. A lens as claimed in claim 4 or 5, wherein the bridging section (46g) is inwardly curved as viewed from the light source location.

7. A lens as claimed in any preceding claim, wherein the second lens surface further comprises third and fourth upper outer regions (46c, 46d) arranged respectively between the lateral outwardly curved sections (46a, 46b) and the total internal reflection side walls (46e, 46f).

8. A lens as claimed in claim 7, wherein third and fourth regions (46c, 46d) are formed by part of a columnar surface, with the column axis parallel to the second direction (62).

9. A lens as claimed in any preceding claim, wherein the side walls (44b, 44c) of the first lens surface in said cross section along the second direction (62) slope inwardly.

10. A lens as claimed in any preceding claim, wherein the total internal reflection side walls (46e, 46f) of the second lens surface in said cross section along the second direction (62) slope outwardly.

11. A lens as claimed in any preceding claim, wherein in said cross section along the second direction (62), the first and second lens surfaces operate as a total internal reflection collimator to create a narrow light distribution and wherein in said cross section along the first direction (60), the first and second lens surfaces operate as a peanut lens to create a wide light distribution.

12. A lens as claimed in any preceding claim, having a length along the first direction of 10 mm to 50 mm, a width along the second direction of 10 mm to 50 mm and a height of 5 mm to 20 mm.

13. A lighting unit comprising:
a lens as claimed in any preceding claim; and
a light source (80) located at the light source location such as a single LED.

14. A road lighting luminaire, comprising:
a lighting unit as claimed in claim 13; and
a light pole for mounting the lighting unit above a road or walkway.

15. A road lighting luminaire as claimed in claim 14, wherein the lighting unit is aligned with respect to the light pole such that the first direction is for arrangement parallel to the road or walkway and horizontal, and the second direction is for arrangement offset to the horizontal.
